# EUROPEAN PATENT APPLICATION

(11) **EP 4 693 876 A1**
(43) Date of publication of application: **11.02.2026**
(21) Application number: 25158519.6
(22) Date of filing: 18.02.2025
(51) Int. Cl.: H02M 7/219, H02M 7/5387, H02M 3/158

(54) **POWER CONVERSION CIRCUIT AND INVERTER**

(30) Priority: 06.08.2024 TW 113129459
(71) Applicant: Delta Electronics, Inc., Taoyuan City 333 (TW)
(72) Inventor: CHANG, Chun, 333 Taoyuan (TW); LIN, Cheng-Yi, 333 Taoyuan (TW); WANG, Chien-Hsi, 333 Taoyuan (TW); LI, Cheng-Chung, 333 Taoyuan (TW)
(74) Representative: Nederlandsch Octrooibureau

(57) **Abstract**

A power conversion circuit is coupled to a motor and a wireless charging transmitter device. Power conversion circuit includes an inverter and a processor. Inverter includes three half-bridge circuits. Three half-bridge circuits are respectively coupled to a battery, motor and wireless charging transmitter device. Each of three half-bridge circuits includes two switches. Processor is coupled to switches of three half-bridge circuits and generates a plurality of control signals at a first stage to respectively control switches according to a first level of each of control signals, so that battery supplies power to motor. Processor adjusts first level of each of control signals to a second level during a second stage to turn off one of three half-bridge and to turn on switches of the other two of three half-bridge alternately so as to adjust a power supply of wireless charging transmitter device to charge battery to a target power.

## Description

### BACKGROUND

### Field of Invention

The present disclosure relates to a charging and discharging electronic device. More particularly, the present disclosure relates to a power conversion circuit and an inverter.

### Description of Related Art

Conventional coil of a power conversion circuit needs to be connected to an external rectifier to rectify alternating current (AC) of the secondary side coil into direct current (DC). Then, DC power needs to be converted into the DC value specified by a battery through a DC-DC converter. Therefore, an external rectifier and a DC-DC converter respectively occupy a certain proportion of the space in a device and affect heat dissipation effect. The above two circuits are not conducive to a miniaturization design of a device.

For the foregoing reasons, there is a need for providing a power conversion circuit and an inverter to solve the above problems encountered in related art approaches.

### SUMMARY

One aspect of the present disclosure provides a power conversion circuit. The power conversion circuit is coupled between a motor and a wireless charging transmitter device. The power conversion circuit includes an inverter and a processor. The inverter includes a first half-bridge circuit, a second half-bridge circuit and a third half-bridge circuit. The first half-bridge circuit, the second half-bridge circuit and the third half-bridge circuit are coupled to a battery, the motor and the wireless charging transmitter device. Each of the first half-bridge circuit, the second half-bridge circuit and the third half-bridge circuit includes two switches. The processor is coupled to the switches of each of the first half-bridge circuit, the second half-bridge circuit and the third half-bridge circuit. The processor is configured to generate a plurality of control signals at a first stage to respectively control the switches according to a first level of each of the control signals so that the battery supplies power to the motor. The processor is configured to adjust the first level of each of the control signals to a second level at a second stage to turn off one of the first half-bridge circuit, the second half-bridge circuit and the third half-bridge circuit. The processor is configured to alternately conduct the switches of the other two of the first half-bridge circuit, the second half-bridge circuit and the third half-bridge circuit so as to adjust a power supply of the wireless charging transmitter device to charge the battery to a target power.

Another aspect of the present disclosure provides an inverter. The inverter is disposed in a power conversion circuit. The power conversion circuit is coupled between a motor and a wireless charging transmitter device. The inverter includes a first half-bridge circuit, a second half-bridge circuit and a third half-bridge circuit. The first half-bridge circuit, the second half-bridge circuit and the third half-bridge circuit are coupled to a battery, the motor and the wireless charging transmitter device. Each of the first half-bridge circuit, the second half-bridge circuit and the third half-bridge circuit includes two switches. Each of the switches of the first half-bridge circuit, the second half-bridge circuit and the third half-bridge circuit respectively receive a plurality of control signals of a processor, and the switches are controlled according to a first level of each of the control signals at a first stage so that the battery supplies power to the motor. The processor is configured to adjust the first level of each of the control signals to a second level at a second stage to turn off one of the first half-bridge circuit, the second half-bridge circuit and the third half-bridge circuit. The processor is configured to alternately conduct the switches of the other two of the first half-bridge circuit, the second half-bridge circuit and the third half-bridge circuit so as to adjust a power supply of the wireless charging transmitter device to charge the battery to a target power.

In view of the aforementioned shortcomings and deficiencies of the prior art, the present disclosure provides a design of a power conversion circuit and an inverter. Through the design of the present disclosure, a power conversion circuit can be miniaturized.

### BRIEF DESCRIPTION OF THE DRAWINGS

The present disclosure can be more fully understood by reading the following detailed description of the embodiment, with reference made to the accompanying drawings as follows:
Fig. 1 depicts a schematic diagram of an electronic device and a wireless charging transmitter device according to some embodiments of the present disclosure;
Fig. 2 depicts a detail schematic diagram of a power conversion circuit, a motor, a battery and a wireless charging transmitter device according to some embodiments of the present disclosure;
Fig. 3A and Fig. 3B depict a schematic diagram of a circuit state of a power conversion circuit, a motor, a battery and a wireless charging transmitter device according to some embodiments of the present disclosure;
Fig. 4 depicts a schematic diagram of a voltage and a current of a power conversion circuit according to some embodiments of the present disclosure;
Fig. 5A and Fig. 5B depict a schematic diagram of a circuit state of a power conversion circuit, a motor, a battery and a wireless charging transmitter device according to some embodiments of the present disclosure;
Fig. 6A to Fig. 6F depict a schematic diagram of a circuit state of a power conversion circuit, a motor, a battery and a wireless charging transmitter device according to some embodiments of the present disclosure;
Fig. 7 depicts a schematic diagram of a power conversion circuit, a motor, a battery and a wireless charging transmitter device according to some embodiments of the present disclosure;
Fig. 8 depicts a schematic diagram of a circuit state of a charging mode of a power conversion circuit according to some embodiments of the present disclosure;
Fig. 9 depicts a schematic diagram of a circuit state of a charging mode of a power conversion circuit according to some embodiments of the present disclosure;
Fig. 10 depicts a schematic diagram of a circuit state of a discharging mode of a power conversion circuit according to some embodiments of the present disclosure;
Fig. 11 depicts a schematic diagram of a circuit state of a power conversion circuit, a motor, a battery and a wireless charging transmitter device according to some embodiments of the present disclosure;
Fig. 12 depicts a schematic diagram of a circuit state of a charging mode of a power conversion circuit according to some embodiments of the present disclosure;
Fig. 13 depicts a schematic diagram of a circuit state of a charging mode of a power conversion circuit according to some embodiments of the present disclosure; and
Fig. 14 depicts a schematic diagram of a circuit state of a discharging mode of a power conversion circuit according to some embodiments of the present disclosure.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

The terminology used herein is for the purpose of describing particular example embodiments only and is not intended to be limiting of the present disclosure. As used herein, the singular forms "a," "an" and "the" are intended to include the plural forms as well, unless the context clearly indicates otherwise.

Furthermore, it should be understood that the terms, "comprising", "including", "having", "containing", "involving" and the like, used herein are open-ended, that is, including but not limited to.

The terms used in this specification and claims, unless otherwise stated, generally have their ordinary meanings in the art, within the context of the disclosure, and in the specific context where each term is used. Certain terms that are used to describe the disclosure are discussed below, or elsewhere in the specification, to provide additional guidance to the practitioner skilled in the art regarding the description of the disclosure.

Conventional coil of a power conversion circuit needs to be connected to an external rectifier to rectify alternating current (AC) of the secondary side coil into direct current (DC). Then, DC power needs to be converted into the DC value specified by a battery through a DC-DC converter. In addition, external rectifier and a DC-DC converter are only used in a charging mode for wireless charging a battery. In other word, when a battery is in a discharging mode to discharge a motor, an external rectifier and a DC-DC converter are equivalent to having no effect.

Therefore, an external rectifier and a DC-DC converter respectively occupy a certain proportion of the space in a device and affect heat dissipation effect. The present disclosure designs an operating method and circuit structure of an inverter that shares a power conversion circuit, in order to be lightweight and save internal space and component costs of a device, thereby achieving miniaturization design of a device.

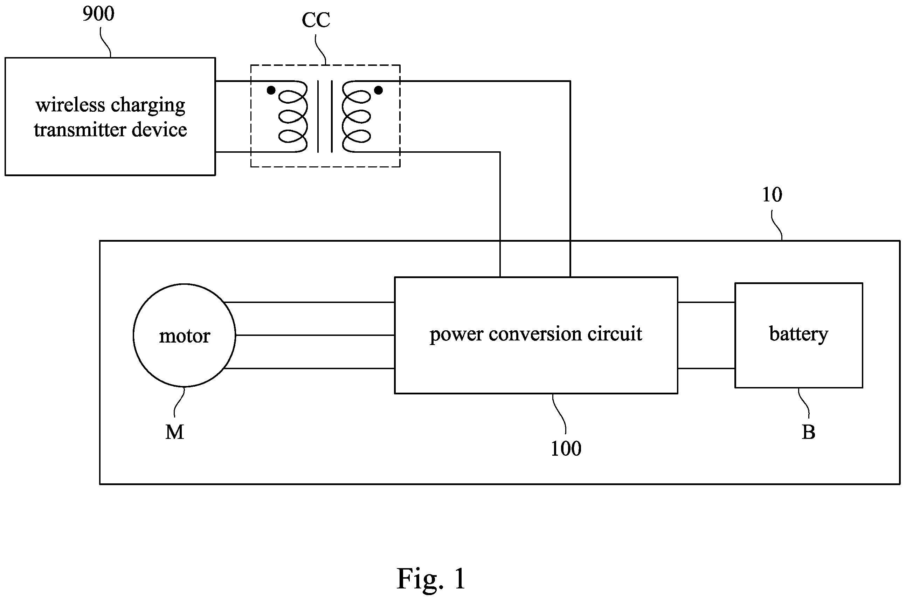

In order to facilitate the understanding a simple structure and an operation of a designed circuit of the present disclosure, please refer to Fig. 1. Fig. 1 depicts a schematic diagram of an electronic device 10 and a wireless charging transmitter device 900 according to some embodiments of the present disclosure. In some embodiments, the electronic device 10 can be implemented as mobile electronic devices such as electric bicycles (E-bikes) or unmanned vehicles in factories. The electronic device 10 includes a motor M and a battery B. Due to current needs, the electronic device 10 needs to convert a power of the battery B to drive the motor M, and the electronic device 10 needs to rectify a power of a charging source to charge the battery B. The electronic device 10 further includes a power conversion circuit 100. The battery B can be disposed inside the power conversion circuit 100 or outside the power conversion circuit 100 according to actual needs.

The power conversion circuit 100 is couple between the wireless charging transmitter device 900 and the battery B. The wireless charging transmitter device 900 is connected to a current source (not shown in the figure). The wireless charging transmitter device 900 includes a half-bridge circuit (not shown in the figure). The wireless charging transmitter device 900 are configured to output a square wave through the half-bridge circuit, and convert a DC power of the DC power supply into AC power through inductors and capacitors of the wireless charging transmitter device 900. At this time, the AC power forms a magnetic field at the transmitter terminal of a wireless charging coil CC, to transmit energy to the receiver terminal of the wireless charging coil CC to convert energy and then charge battery B. A charging path when the designed circuit of the present disclosure is in the charging mode (or called a charging stage) starts from the wireless charging transmitter device 900, and sequentially passes through the wireless charging coil CC, the power conversion circuit 100 to the battery B.

The power conversion circuit 100 is couple between the battery B and the motor M. A discharging path when the designed circuit of the present disclosure is in the discharging mode (or called a discharging stage) starts from the battery B, and sequentially passes through the power conversion circuit 100 to the motor M. Therefore, the power conversion circuit 100 of the present disclosure is in an operating state regardless of the charging mode (or called a charging stage) or the discharging mode. The present disclosure will describe implementation methods to solve the aforementioned problems in following paragraphs.

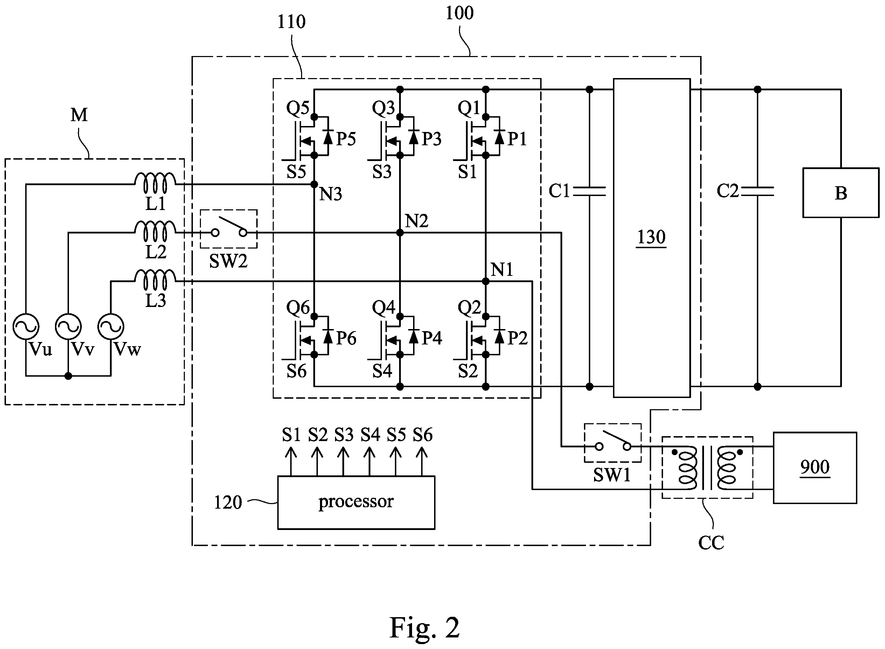

In order to facilitate the understanding a detail structure of the power conversion circuit 100 of the present disclosure, please refer to Fig. 2. Fig. 2 depicts a detail schematic diagram of the power conversion circuit 100, the motor M, the battery B and the wireless charging transmitter device 900 according to some embodiments of the present disclosure. In some embodiments, please refer to Fig. 2, the power conversion circuit 100 includes an inverter 110, a processor 120, a converter 130, a guarded switch SW1 and a guarded switch SW2. The inverter 110 is coupled to the motor M, a capacitor C1 and the converter 130. The inverter 110 is coupled to the battery B and a capacitor C2 through the converter 130. The processor 120 is coupled to the converter 130, the guarded switch SW1 and the guarded switch SW2.

In some embodiments, please start from a top side and a right side of each of components in the picture as a first terminal, the inverter 110 includes a transistors Q1 to Q6. Each of the transistors Q1 to Q6 includes a first terminal, a second terminal and a control terminal. The first terminals of the transistor Q1, the transistor Q3 and the transistor Q5 are coupled to a first terminal of the capacitor C1. The second terminals of the transistor Q2, the transistor Q4 and the transistor Q6 are coupled to a second terminal of the capacitor C1. The second terminal of the transistor Q1 is coupled to the first terminal of the transistor Q2 and a node N1. The transistor Q1 and the transistor Q2 belong to the same half-bridge circuit. The second terminal of the transistor Q3 is coupled to the first terminal of the transistor Q4 and a node N2. The transistor Q3 and the transistor Q4 belong to the same half-bridge circuit. The second terminal of the transistor Q5 is coupled to the first terminal of the transistor Q6 and a node N3. The transistor Q5 and the transistor Q6 belong to the same half-bridge circuit. It should be noted that, the transistors Q1 to Q6 are configured to amplify signals in the circuits. The transistors Q1 to Q6 are used as switches in the present disclosure.

In some embodiments, the transistors Q1 to Q6 can be implemented as P-type Metal-Oxide-Semiconductor Field-Effect Transistor (PMOS) or N-type Metal-Oxide-Semiconductor Field-Effect Transistor (NMOS). In some embodiments, each of the transistors Q1 to Q6 includes corresponding parasitic diodes P1 to P6 respectively.

In some embodiments, please refer to Fig. 2, the processor 120 is coupled to the transistors Q1 to Q6 of the inverter 110 respectively. The processor 120 is configured to generate control signals S1 to S6 to corresponding transistors Q1 to Q6. In some embodiments, the processor 120 can be implemented by pure hardware and does not rely on software to realize its functions. For example, the processor 120 can monitor a voltage and a current of a circuit of the power conversion circuit 100 through a voltage/current detection circuit of the converter 130 to generate control signals S1 to S6. In some embodiments where the processor 120 is implemented by pure hardware, the processor 120 can be implemented as an Application Specific Integrated Circuit (ASIC).

In some embodiments, the converter 130 can be implemented as a DC-to-DC converter, which is a circuit or electromechanical device for power conversion, and can further convert the original DC power supply into a DC power supply with different voltage values.

In some embodiments, the motor M can be implemented as a three phase motor. The three phase motor includes three stator windings (e.g. a motor inductor L1, a motor inductor L2 and a motor inductor L3). A voltage/current of each phase is 120 degrees apart, forming a rotating magnetic field to drive the rotor to rotate (e.g. a phase power supply Vu, a phase power supply Vv and a phase power supply Vw).

In some embodiments, the guarded switch SW1 and the guarded switch SW2 are coupled to the node N2 (i.e. the half-bridge circuit composed of the transistor Q3 and the transistor Q4). Under the charging mode (or called a charging stage), the guarded switch SW1 is conducted and the guarded switch SW2 is not conducted to ensure that the charging path of the charging mode will not affect the motor M. Under the discharging mode (or called discharging stage), the guarded switch SW1 is not conducted and the guarded switch SW2 is conducted, to ensure that the discharging path of the discharging mode will not affect the wireless charging coil CC and the wireless charging transmitter device 900.In some embodiments, the guarded switch SW1 and the guarded switch SW2 are turned on and off respectively according to operation signals output by the processor 120.

It should be noted that, the guarded switch SW1 and the guarded switch SW2 may be not coupled to the same node. A position of each of the guarded switch SW1 and the guarded switch SW2 can be designed according to actual needs, and are not limited to the embodiments of figures of the present disclosure.

Please refer to Fig. 2, the inverter 110 is configured to rectify the AC power induced by the wireless charging coil CC in the charging mode to convert it into DC power. Then, the converter 130 is configured to convert the DC power into DC power with different voltage values in the charging mode to store it in the battery B. A rectification method of the inverter 110 can be implemented as active rectification or passive rectification according to the characteristics of the components. Detail operation of rectification will be described in following paragraphs.

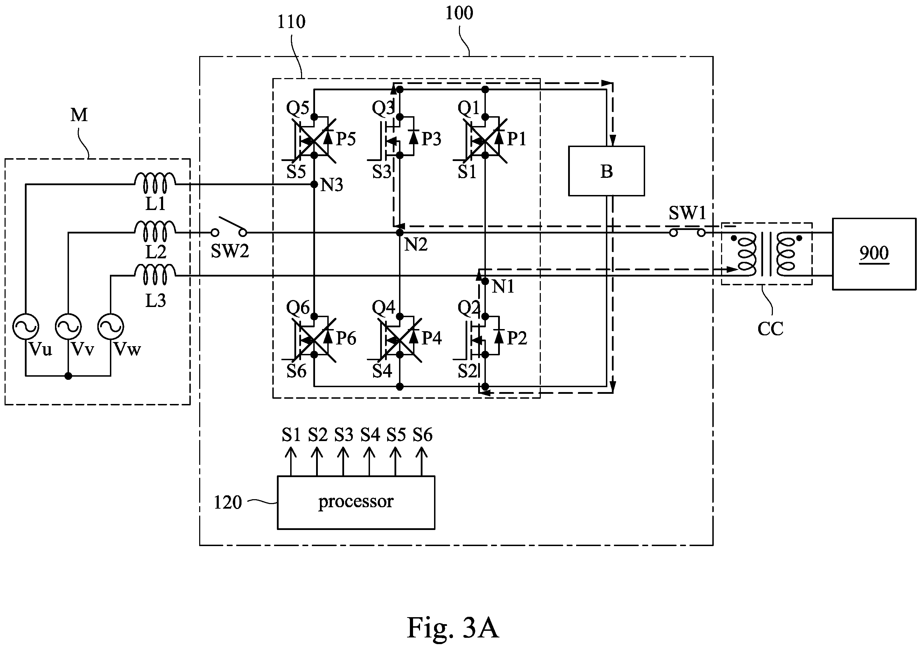

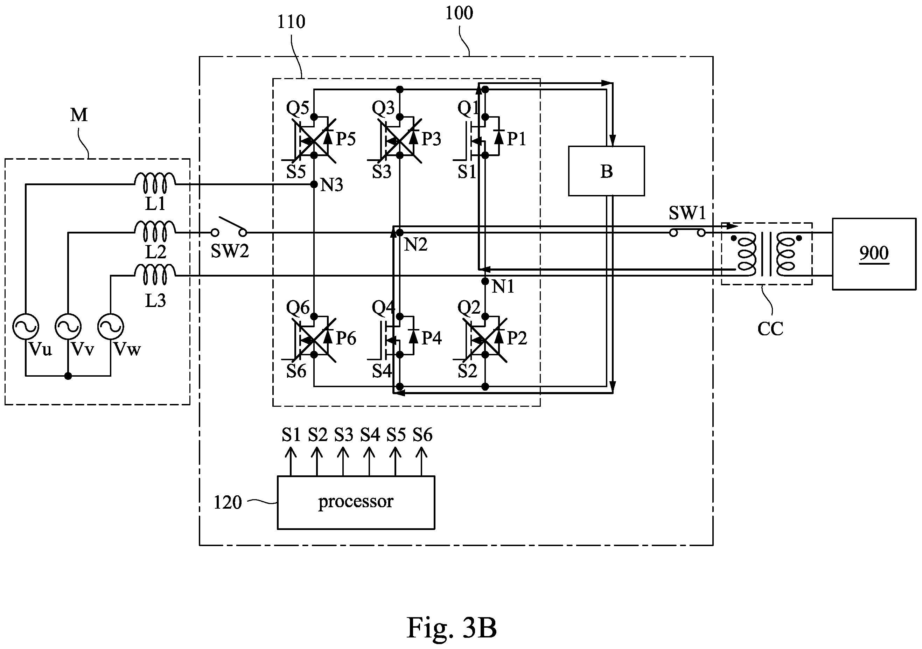

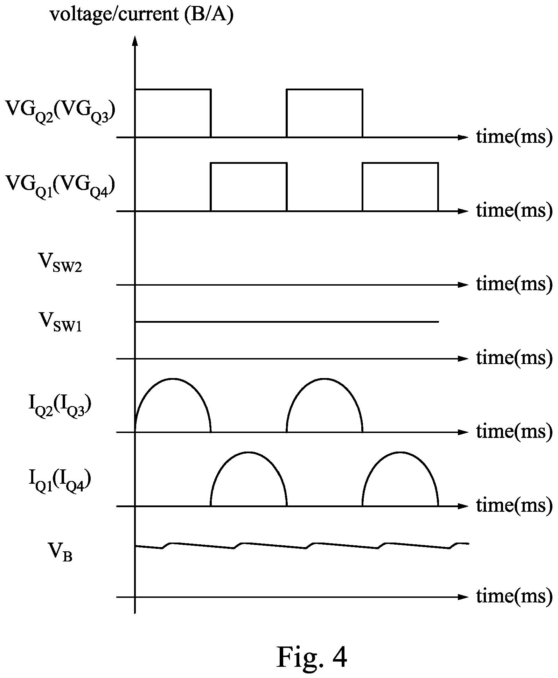

In order to facilitate the understanding detail operation of rectification of the power conversion circuit 100 of the present disclosure, please refer to Fig. Fig. 3A to Fig. 4 together. Fig. 3A and Fig. 3B depict a schematic diagram of a circuit state of the power conversion circuit 100, the motor M, the battery B and the wireless charging transmitter device 900 of the present disclosure according to some embodiments of the present disclosure. Fig. 4 depicts a schematic diagram of a voltage and a current of a power conversion circuit 100 according to some embodiments of the present disclosure. Voltage and current diagram in Figure 4 respectively shows voltage and current conditions of the power conversion circuit 100 in the charging mode. The voltage, the current and the subscript symbols respectively correspond to components in the power conversion circuit 100. It should be noted that Fig. 3A and Fig. 3B mainly describe the rectification operation of the inverter 110 in following paragraphs, so the converter 130 is temporarily omitted.

Please refer to Fig. 3A, Fig. 3B and Fig. 4, when the power conversion circuit 100 is in the charging mode, the processor 120 of the power conversion circuit 100 is configured to output the control signals S1 to S6 to control one of the three half-bridge circuits of the inverter 110 to be turned off (e.g. the half-bridge circuit formed by the transistor Q5 and the transistor Q6), and alternately conduct the other two of the three half-bridge circuits of the inverter 110 (e.g. two half-bridge circuits formed by the transistors Q1 to Q4). The two half-bridge circuits formed by transistors Q1 to Q4 are similar to the operation of the full-bridge circuit. In detail, as shown in Fig. 3A, the transistor Q2 and the transistor Q3 are conducted first, and the transistor Q1 and the transistor Q4 are turned off. Then, as shown in Fig. 3B, the transistor Q1 and the transistor aQ4 are conducted, and the transistor Q2 and the transistor Q3 are turned off. In this way, alternating operation of the transistors Q1 to Q4 can convert a negative voltage in the AC power into a positive voltage to rectify it into a DC voltage. Alternating operation of the transistors Q1 to Q4 is active rectification in the charging mode (or called charging stage) of the power conversion circuit 100 power conversion circuit 100.

Please refer to Fig. 2 again, the processor 120 of the power conversion circuit 100 is configured to determine a constant current (CC) charging mode or a constant voltage (CV) charging mode through a voltage/current detection of the converter 130.

If a voltage of the battery B is lower than a preset voltage value of the constant voltage (CV) charging mode, the processor 120 is configured to execute the constant current (CC) charging mode, and will sequentially control the inverter 110 to perform rectification and utilize the converter 130 for conversion. At this time, a state of the battery B is that the voltage of the battery B increases, the resistance of the battery B decreases, and it is charged with a large current. Then, when the voltage of the battery reaches the preset voltage value of the constant voltage (CV) charging mode, the processor 120 will be configured to execute the constant voltage (CV) charging mode and charge with a preset charging voltage value. At this time, a state of the battery B is that the voltage of the battery B has reached a set charging voltage, but due to the internal resistance, the internal voltage of battery B is low. At the same time, a charging current decreases as the internal voltage of battery B increases. Finally, when the charging current reaches a set termination charging current value, the battery B will continue to be charged for a period of time and then complete charging.

If the voltage of the battery B is higher than the preset voltage value of the constant current (CC) charging mode, the constant voltage (CV) charging mode will be directly performed. Detailed operation has been explained above, and repetitious details are omitted herein.

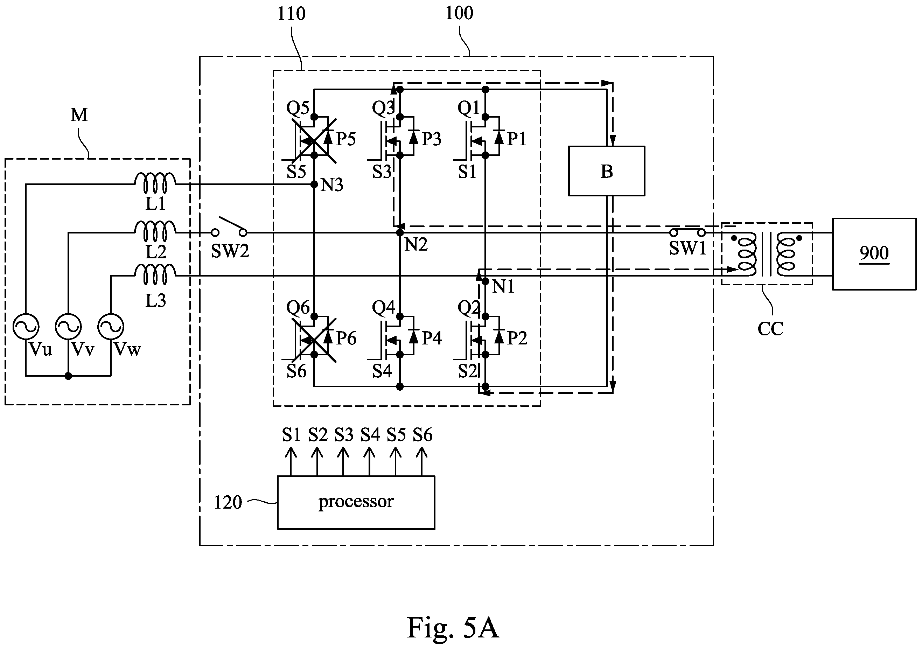

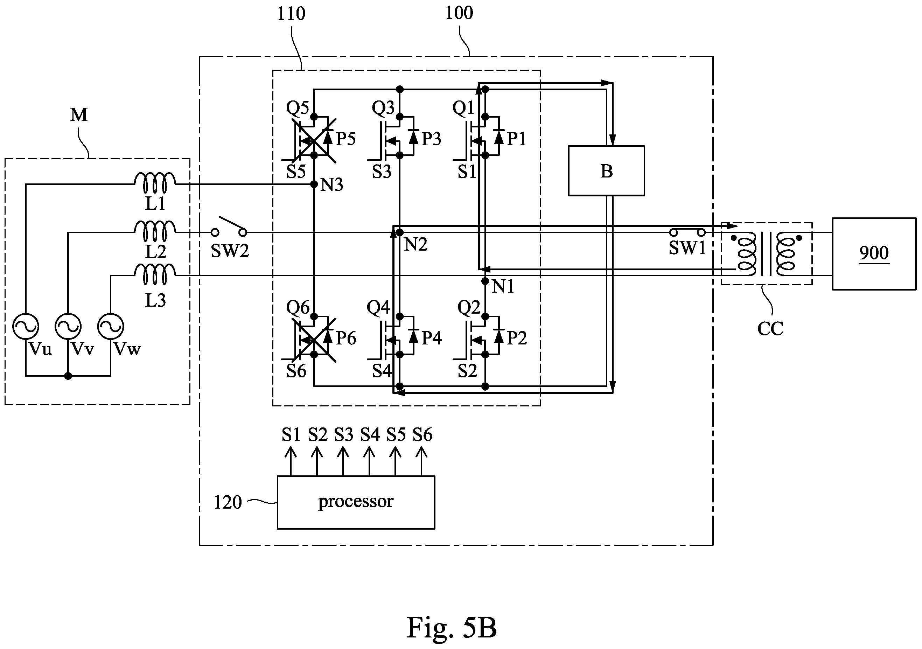

Fig. 5A and Fig. 5B depict a schematic diagram of a circuit state of the power conversion circuit 100, the motor M, the battery B and the wireless charging transmitter device 900 according to some embodiments of the present disclosure. In some embodiments, please refer to Fig. 5A and Fig. 5B, the charging mode of the power conversion circuit 100 can be implemented as passive rectification. The processor 120 of the power conversion circuit 100 is configured to output the control signals S1 to S6, to turn off one of three half-bridge circuit (e.g. the half-bridge circuit formed by the transistor Q5 and the transistor Q6), and make the other two of the three half-bridge circuits (e.g. the two half-bridge circuits formed by transistors Q1 to Q4) operate in a nearly closed state (i.e., a slightly partially conductive state), to convert a negative voltage in the alternating current into a positive voltage through the parasitic diodes P1 to P4 of the corresponding transistors Q1 to Q4 to rectify it into a DC voltage. The aforementioned method through the parasitic diode P1 to the parasitic diode P4 belongs to the passive rectification in the charging mode.

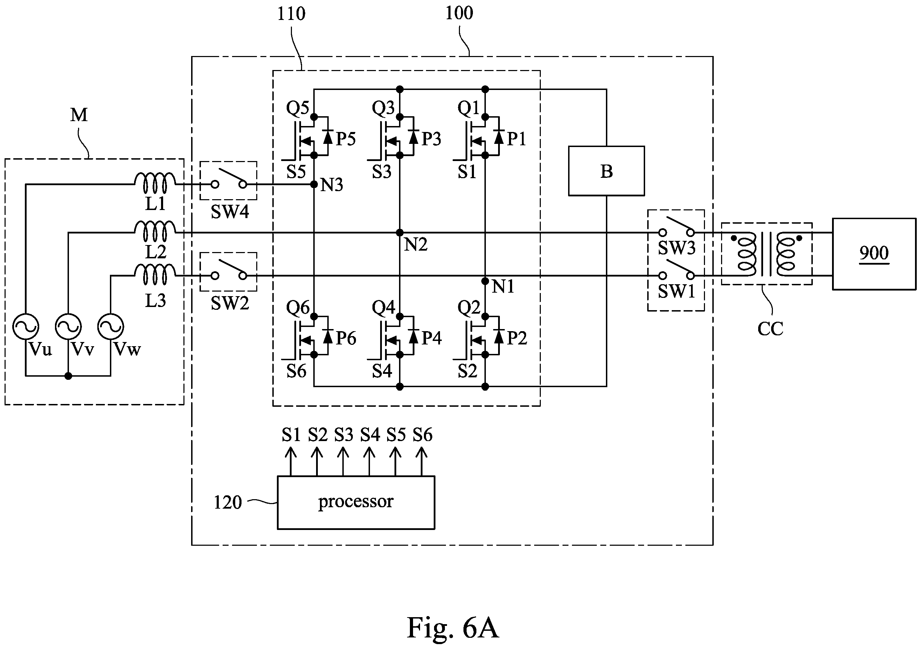

Fig. 6A to 6F depict a schematic diagram of a circuit state of the power conversion circuit 100, the motor M, the battery B and the wireless charging transmitter device 900 according to some embodiments of the present disclosure. The embodiments of Fig. 6A to 6F show that different numbers and positions of switches are provided between the power conversion circuit 100, the wireless charging transmitter 900 and the motor M.

Please refer to Fig. 6A, the guarded switch SW1 and the guarded switch SW2 are coupled to the node N1, and are coupled to the first phase of the three-phase power supply of the motor M (e.g. the lower phase power supply Vw). The switch SW3 is coupled to the node N2, and is coupled to the second phase of the three-phase power supply of the motor M (e.g. the phase power supply Vv in the middle). The switch SW4 is coupled to the node N3, and is coupled to the third phase of the three-phase power supply of the motor M (e.g. the upper phase power supply Vu).

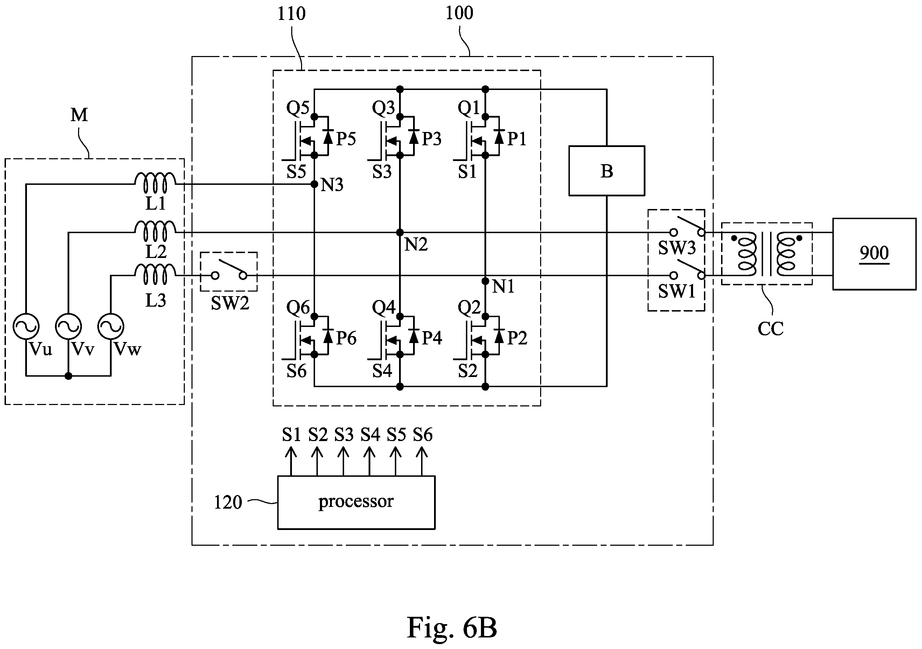

Please refer to Fig. 6B, the guarded switch SW1 and the guarded switch SW2 are coupled to the node N1, and are coupled to the first phase of the three-phase power supply of the motor M (e.g. the lower phase power supply Vw). The switch SW3 is coupled to the node N2, and is coupled to the second phase of the three-phase power supply of the motor M (e.g. the phase power supply Vv in the middle).

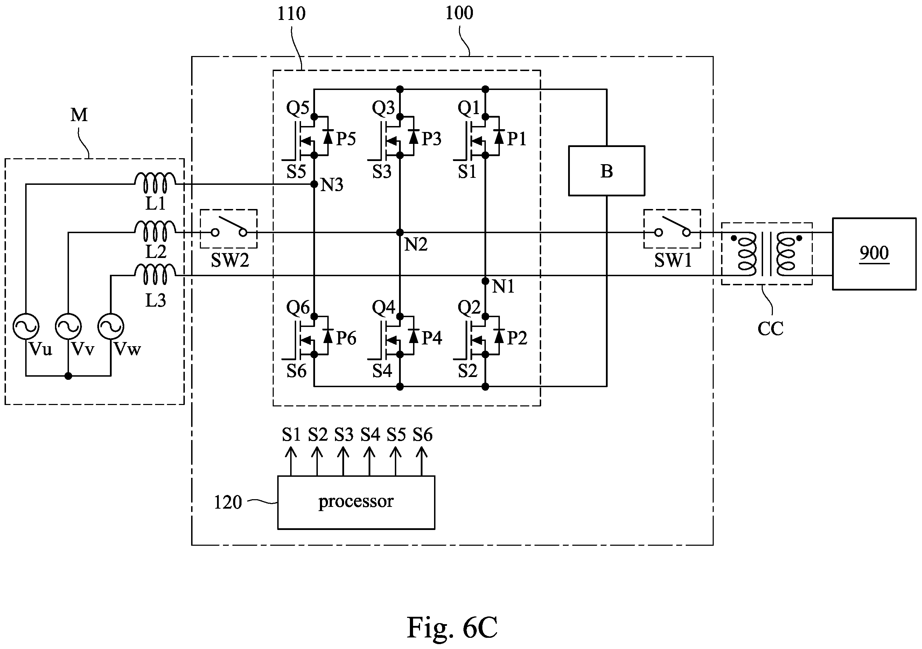

Please refer to Fig. 6C, the guarded switch SW1 and the guarded switch SW2 are coupled to the node N2, and are coupled to the first phase of the three-phase power supply of the motor M (e.g. the phase power supply Vv in the middle).

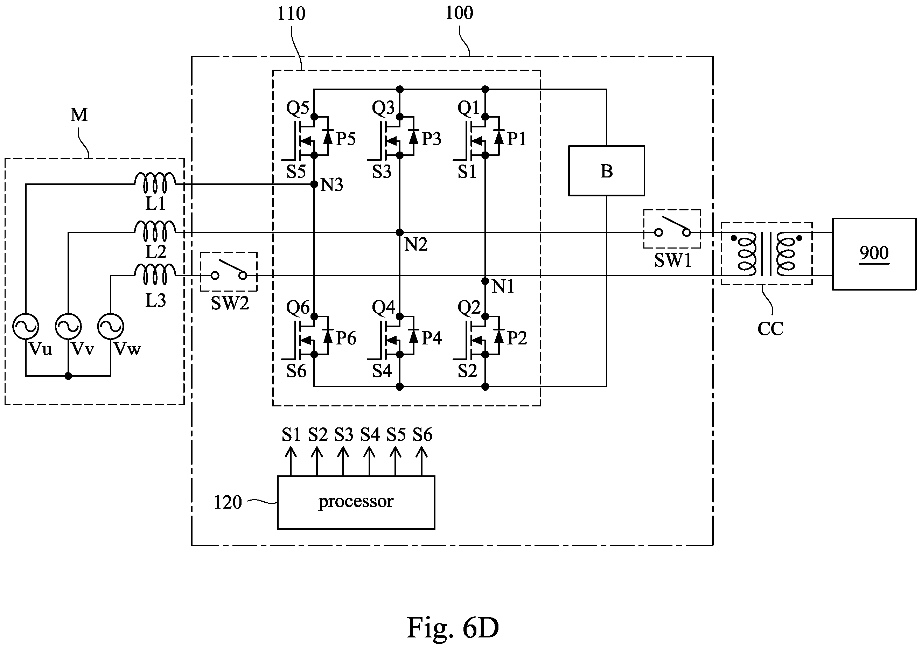

Please refer to Fig. 6D, the guarded switch SW1 is coupled to the node N2, and is coupled to the first phase of the three-phase power supply of the motor M (e.g. the phase power supply Vv in the middle). The guarded switch SW2 is coupled to the node N1, and is coupled to the second phase of the three-phase power supply of the motor M (e.g. the lower phase power supply Vw).

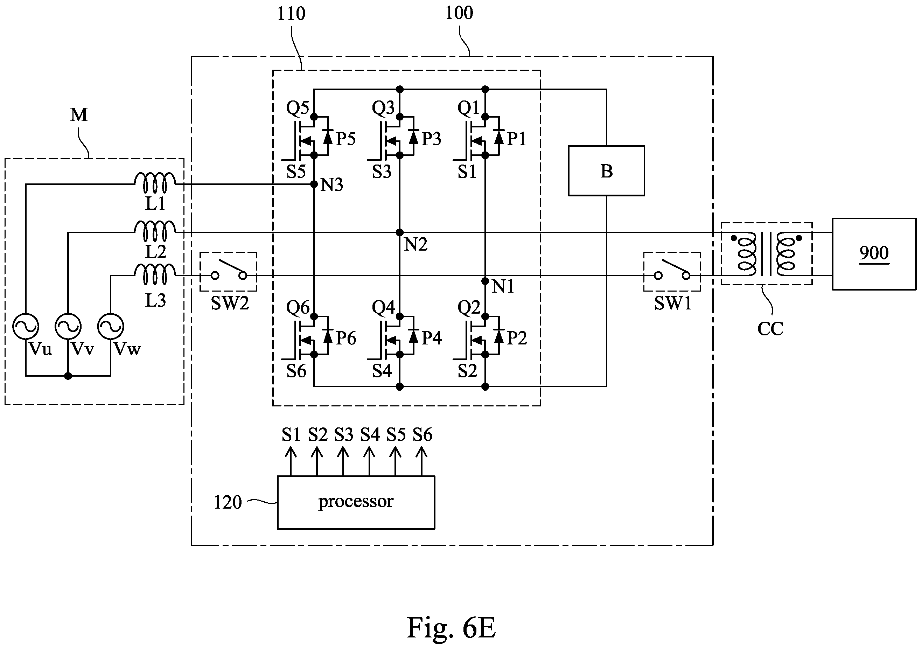

Please refer to Fig. 6E, the guarded switch SW1 and the guarded switch SW2 are coupled to the node N2, and are coupled to the first phase of the three-phase power supply of the motor M (e.g. the lower phase power supply Vw).

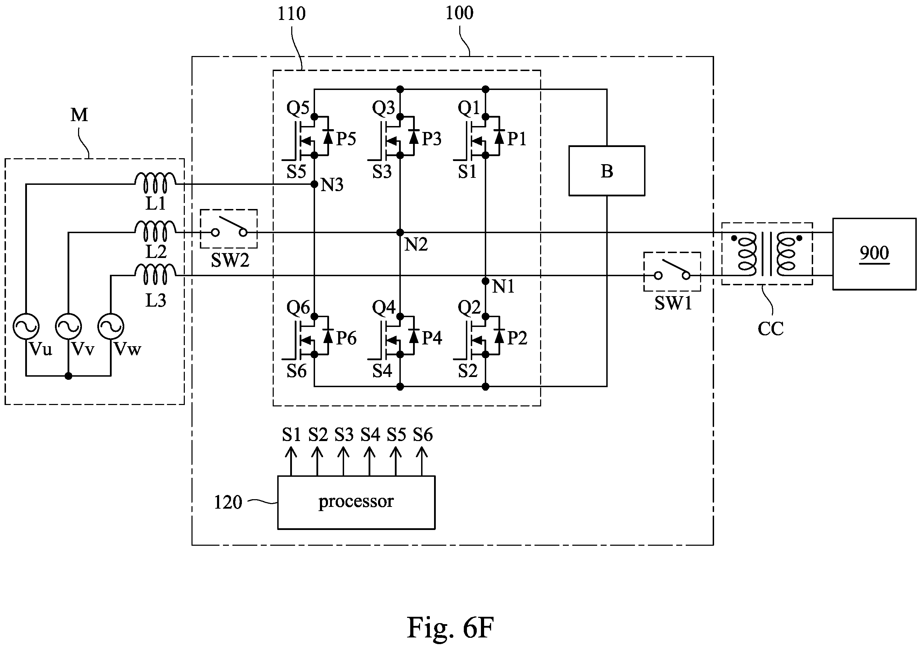

Please refer to Fig. 6F, the guarded switch SW1 is coupled to the node N1, and is coupled to the first phase of the three-phase power supply of the motor M (e.g. the lower phase power supply Vw). The guarded switch SW2 is coupled to the node N2, and is coupled to the second phase of the three-phase power supply of the motor M (e.g. the phase power supply Vv in the middle).

A main purposes of the aforementioned switch designs with different numbers and positions is to ensure that the charging path of the power conversion circuit 100 in the charging mode will not affect the motor M, and to ensure that the discharging path of the power conversion circuit 100 in the discharging mode will not affect the wireless charging transmitter device 900. In addition, this design can ensure that residual charge or leakage current of the circuit structure will not affect components of the power conversion circuit 100 or can confirm whether multiple switches and components in the power conversion circuit 100 are normal during testing.

Accordingly, a shared inverter design of the power conversion circuit 100 has solved the problem that the external rectifier occupies a certain proportion of space of a device, allowing a device to achieve a miniaturization design. However, the present disclosure further proposes additional sharing designs to further reduce a size of the power conversion circuit 100 of the present disclosure. Detailed miniaturization design will be described in following paragraphs.

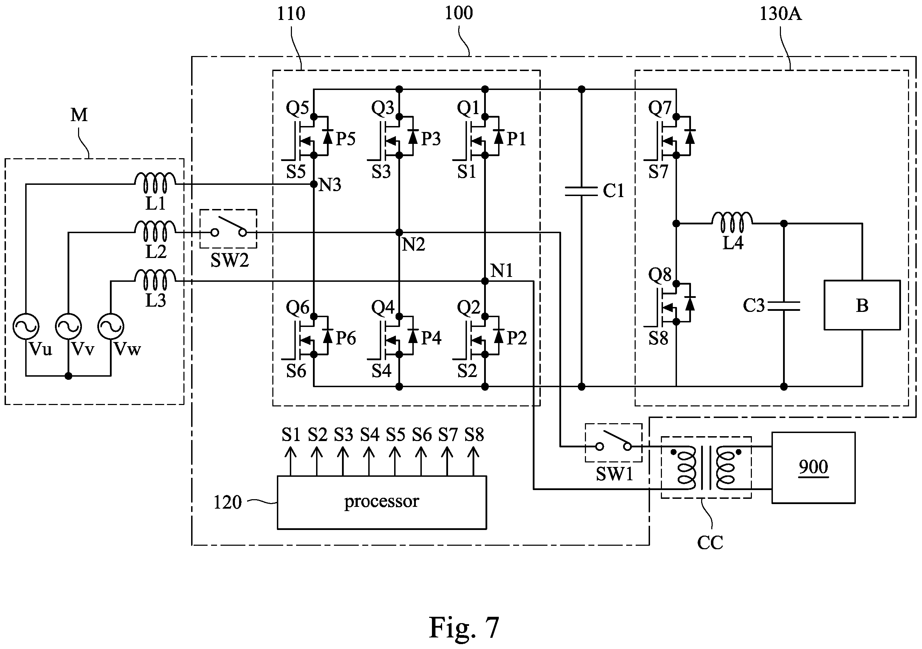

In order to facilitate the understanding circuit structures and operations of miniaturization design of the present disclosure, the present disclosure needs to first introduce operations of the converter 130, please refer to Fig. 7. Fig. 7 depicts a schematic diagram of the power conversion circuit 100, the motor M, the battery B and the wireless charging transmitter device 900 according to some embodiments of the present disclosure. In some embodiments, the power conversion circuit 100 includes the inverter 110, the processor 120 and a converter 130A. The converter 130A can be implemented as a buck converter. The converter 130A includes a converter switch Q7, a converter switch Q8, a converter inductor L4 and a capacitor C3. Each of the converter switch Q7 and the converter switch Q8 includes a first terminal, a second terminal and a control terminal. The first terminal of the converter switch Q7 is coupled to the inverter 110. The second terminal of the converter switch Q7 is coupled to the second terminal of the converter inductor L4. The control terminal of the converter switch Q7 is configured to receive a first control signal S7. The first terminal of the converter inductor L4 is coupled to the first terminal of the capacitor C3. The first terminal of the converter switch Q8 is coupled to the second terminal of the transistor Q7. The second terminal of the converter switch Q8 is coupled to the inverter 110 and the second terminal of the capacitor C3. The control terminal of the converter switch Q8 is configured to receive a second control signal S8. Detailed circuit structures of the power conversion circuit 100 and the motor M in Fig. 7 is similar to the detailed circuit structures of Fig. 2, and repetitious detailed descriptions are omitted here. In some embodiments, the converter switch Q7 and the converter switch Q8 can be implemented as P-type Metal-Oxide-Semiconductor Field-Effect Transistor (PMOS) or N-type Metal-Oxide-Semiconductor Field-Effect Transistor (NMOS).

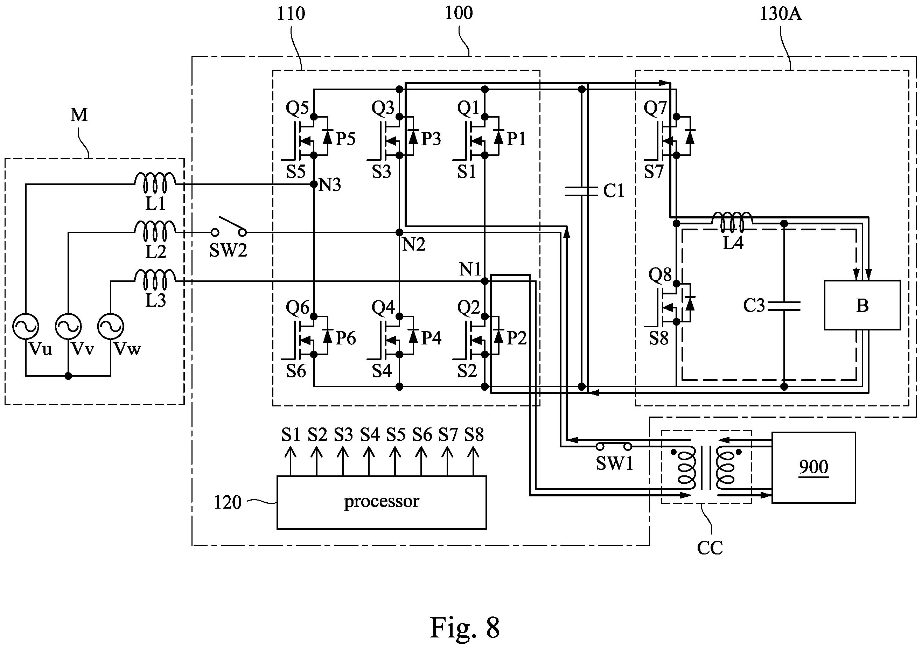

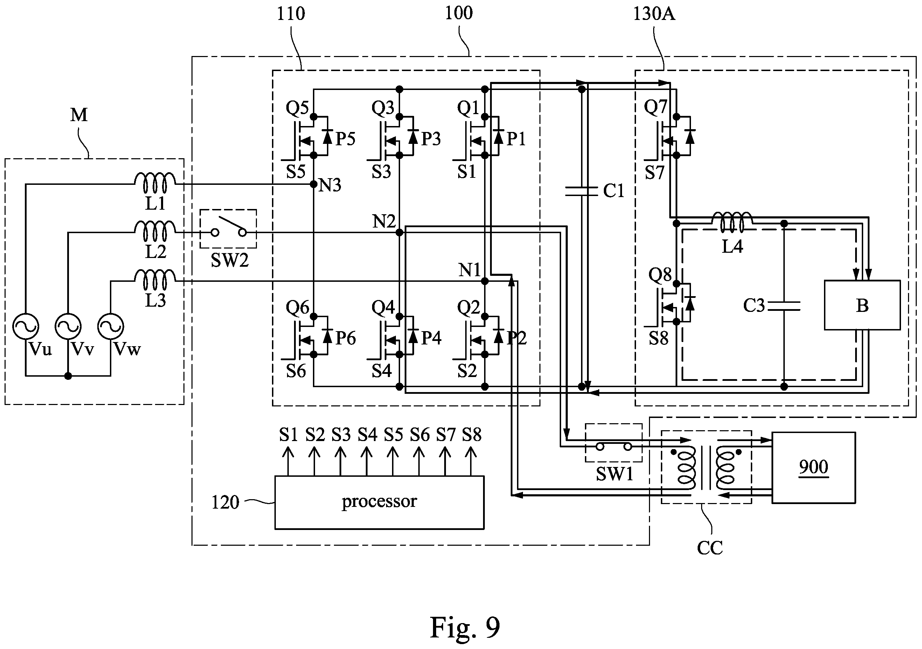

Fig. 8 depicts a schematic diagram of a circuit state of a charging mode of the power conversion circuit 100 according to some embodiments of the present disclosure. Fig. 9 depicts a schematic diagram of a circuit state of a charging mode of the power conversion circuit 100 according to some embodiments of the present disclosure. Operations of the transistor Q2 and the transistor Q3 of the inverter 110 of the power conversion circuit 100 in Fig. 8 are basically similar to the operations of the transistor Q2 and the transistor Q3 of the inverter 110 of the power conversion circuit 100 in Fig. 3A and Fig. 5A, and repetitious details are omitted herein. Operations of the transistor Q1 and the transistor Q4 of the inverter 110 of the power conversion circuit 100 in Fig. 9 are basically similar to the operations of the transistor Q1 and the transistor Q4 of the inverter 110 of the power conversion circuit 100 in Fig. 3B and Fig. 5B, and repetitious details are omitted herein. For the sake of brevity, only the differences are described below.

The embodiment of Fig. 8 and the embodiment of Fig. 9 show the operating states of the converter switch Q7 and the converter switch Q8 of the converter 130A. Please refer to Fig. 8 and Fig. 9, under the charging mode (or called the charging stage), the transistors Q1 to Q4 of the inverter 110 are alternately conduced. At the same time, each of the converter switch Q7 and the converter switch Q8 of the converter 130A is conducted in order to convert the DC power rectified by the inverter 110 into the power stored in the battery B.

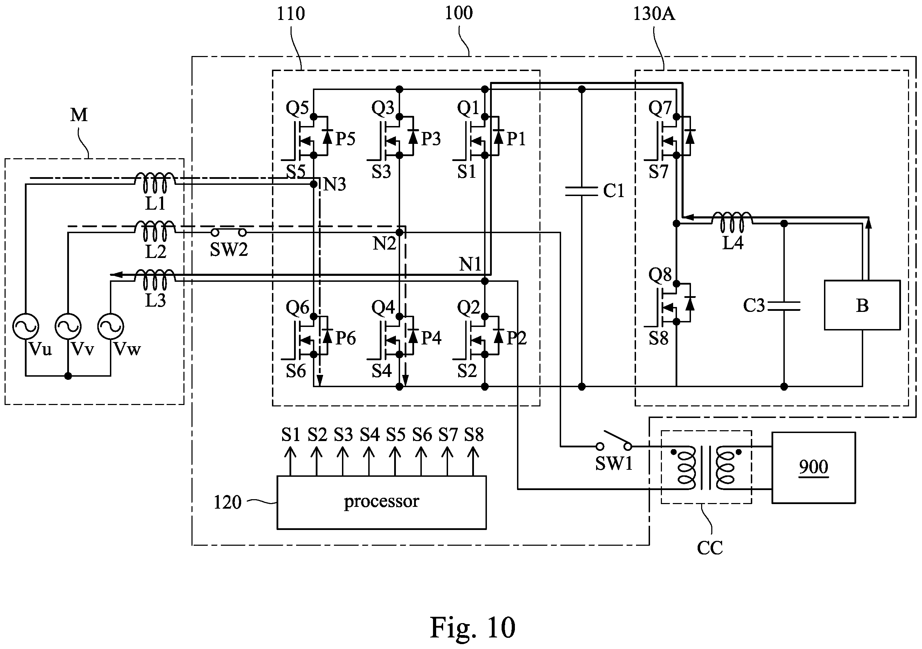

Fig. 10 depicts a schematic diagram of a circuit state of a discharging mode of the power conversion circuit 100 according to some embodiments of the present disclosure. Please refer to Fig. 10, under the discharging mode (or called the discharging stage ), the transistors Q1 to Q6 of the inverter 110 re alternately conduced. At the same time, the converter switch Q7 and the converter switch Q8 of the converter 130A are turned off in order to convert the DC power stored in the battery B in the charging mode (or charging stage) into three-phase AC power for the motor M, thereby performing the process of discharging the motor M. It should be noted that, as shown in Fig. 10, the discharging path sequentially passes through the converter switch Q7 of the converter 130A, one of the bridge arms of the three half-bridge circuits of the inverter 110 (e.g. the transistor Q1), and one of the three-phase power sources of the motor M. (e.g. the phase power supply Vw).

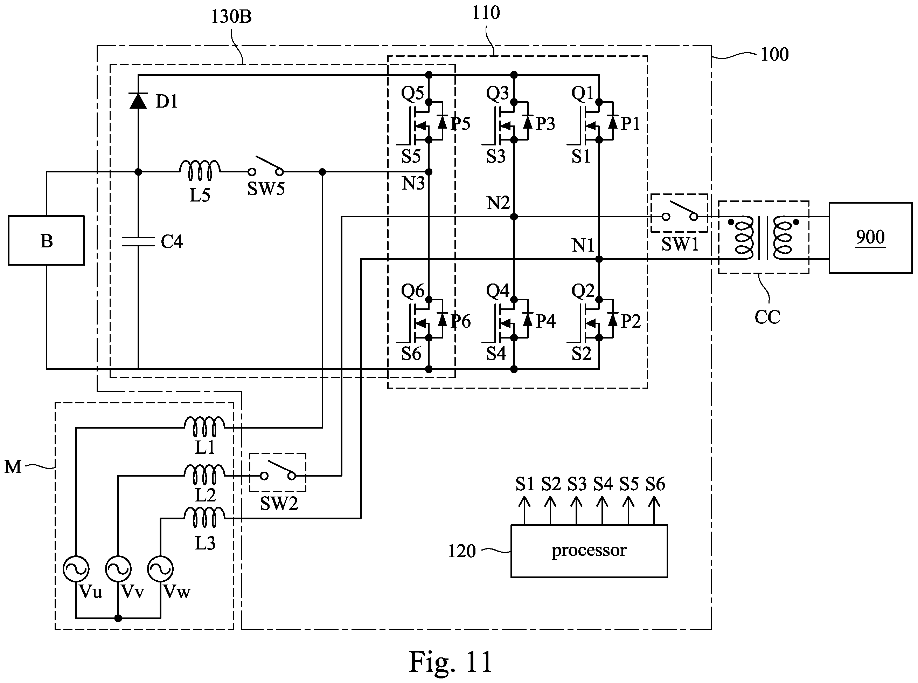

After understanding the operation of converter 130A, in order to facilitate the understanding circuit structures and operations of miniaturization design of the present disclosure, please refer to Fig. 11. Fig. 11 depicts a schematic diagram of a circuit state of the power conversion circuit 100, the motor M, the battery B and the wireless charging transmitter device 900 according to some embodiments of the present disclosure. In some embodiments, the power conversion circuit 100 includes the inverter110, the processor 120 and a converter 130B. The converter 130B can be implemented as a buck converter. The converter 130B includes a change-over switch SW5, a converter inductor L5, a capacitor C4, a diode D1 and the transistor Q5 and the transistor Q6 of the inverter 110. Each of the change-over switch SW5, the converter inductor L5, the capacitor C4, the diode D1 includes a first terminal and a second terminal. The first terminal of the switch SW5 is coupled to the node N3, the inverter 110 and one phase of the three-phase power supply of the motor M. The second terminal of the change-over switch SW5 is coupled to the first terminal of the converter inductor L5. The second terminal of the converter inductor L5 is coupled to the first terminal of the capacitor C4 and the second terminal (i.e. an anode terminal) of the diode D1. Detailed circuit structures of the power conversion circuit 100 and the motor M in Fig. 11 is similar to the detailed circuit structures of Fig. 2 and Fig. 7, and repetitious detailed descriptions are omitted here.

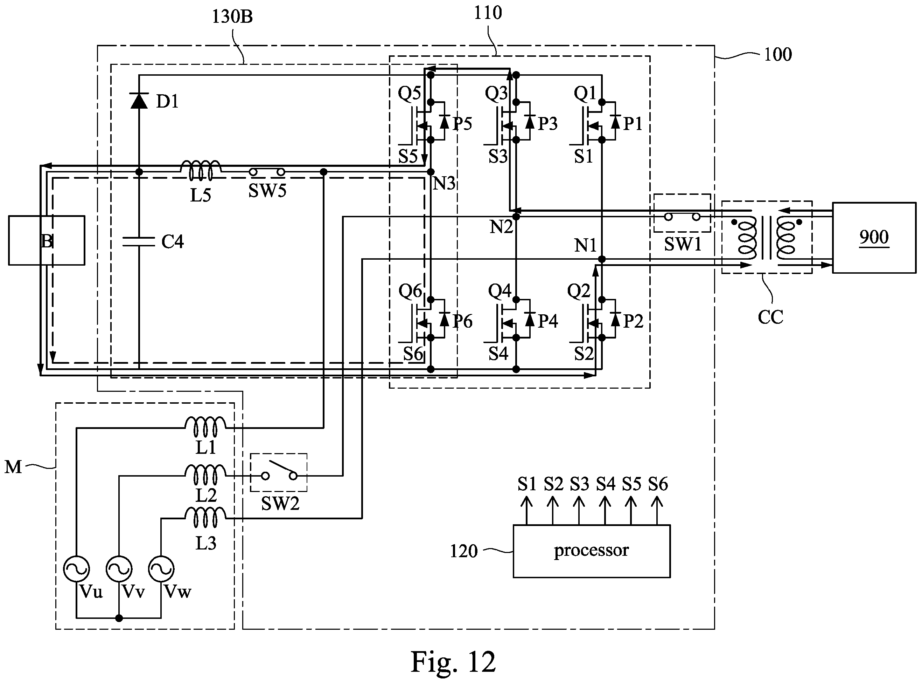

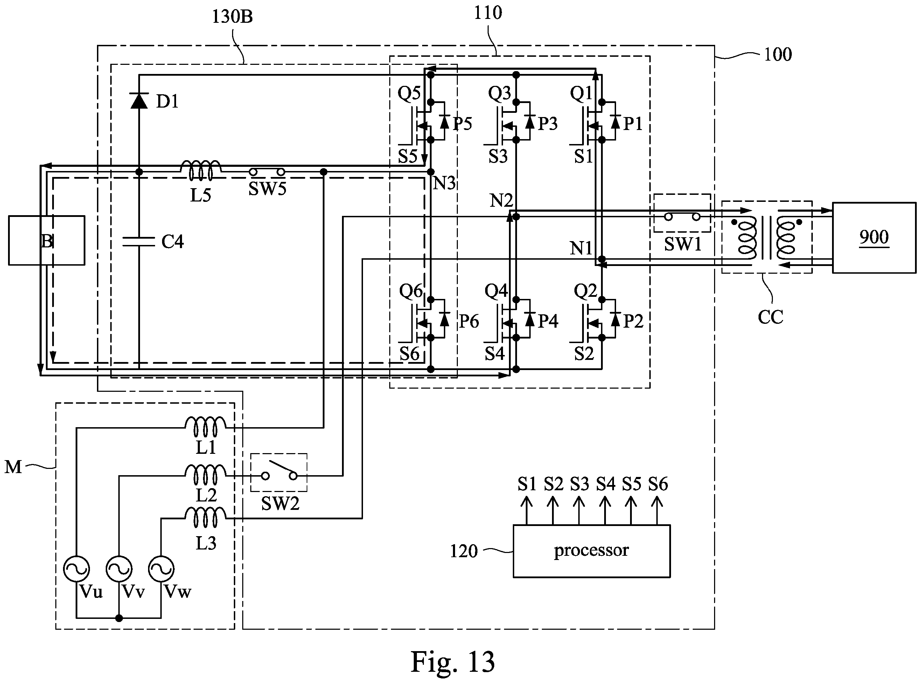

Fig. 12 depicts a schematic diagram of a circuit state of a charging mode of the power conversion circuit 100 according to some embodiments of the present disclosure. Fig. 13 depicts a schematic diagram of a circuit state of a charging mode of the power conversion circuit 100 according to some embodiments of the present disclosure. Operations of the transistor Q2 and the transistor Q3 of the inverter 110 of the power conversion circuit 100 in Fig. 12 are basically similar to the operations of the transistor Q2 and the transistor Q3 of the inverter 110 of the power conversion circuit 100 in Fig. 3A and Fig. 5A, and repetitious details are omitted herein. Operations of the transistor Q1 and the transistor Q4 of the inverter 110 of the power conversion circuit 100 in Fig. 13 are basically similar to the operations of the transistor Q1 and the transistor Q4 of the inverter 110 of the power conversion circuit 100 in Fig. 3B and Fig. 5B, and repetitious details are omitted herein. For the sake of brevity, only the differences are described below.

The embodiments in Fig. 12 and the embodiments in Fig. 13 show an operating state of the transistors Q1 to Q6 of the inverter 110 and the converter 130B according to some embodiments of the present disclosure. Please refer to Fig. 12 and Fig. 13, under the charging mode (or called charging stage), the transistors Q1 to Q4 of the inverter 110 are alternately conducted for rectification. At the same time, the transistor Q5 and transistor Q6 of the inverter 110 are both conducted so that the DC power rectified by the inverter 110 cooperates with the converter inductor L5 and capacitor C4 of the converter 130B to be converted into the power stored in the battery B.

It should be noted that miniaturization design of the present disclosure uses one of the three half-bridge circuits turned off by the inverter 110 in the charging mode as part of the buck converter. Compared with the embodiments in Fig. 8 and the embodiments in Fig. 9, the embodiments in Fig.12 and the embodiments in Fig. 13 conduct the closed one of the three half-bridge circuits again in the charging mode to perform conversion after rectification. In this way, the other two of the three half-bridge circuit remain on alternately for rectification. The aforementioned design of the present disclosure further reduces a number of components in the power conversion circuit 100 to achieve device miniaturization.

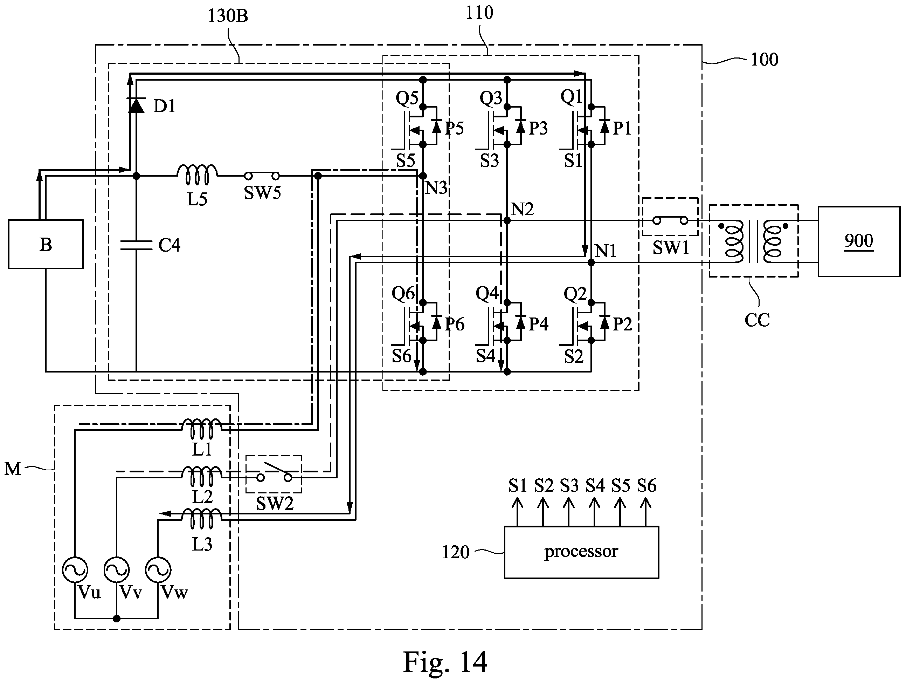

Fig. 14 depicts a schematic diagram of a circuit state of a discharging mode of the power conversion circuit 100 according to some embodiments of the present disclosure. Please refer to Fig. 14, under the discharging mode (or called discharging stage), the transistors Q1 to Q6 of the inverter 110 are alternately conducted. At the same time, the change-over switch SW5 of the converter130B so that the DC power stored in the battery B during the charging mode (or charging stage) is converted into the three-phase AC power of the motor M, thereby performing a process of discharging the motor M from the battery B. It should be noted that, as shown in Fig. 14, the discharging path sequentially passes through the diode D1 of the converter 130B, one of the bridge arms of the three half-bridge circuits of the inverter 110 and one of the three-phase power sources of the motor M. (e.g. the phase power supply Vw).

Based on the aforementioned embodiments, the present disclosure provides a design of a power conversion circuit and an inverter. Through the design of the present disclosure, a problem that an external rectifier occupies a certain proportion of space of a power conversion circuit has been solved, and a power conversion circuit has been designed to be miniaturized. In addition, the present disclosure further adjusts operation of an inverter and a converter of a power conversion circuit of the present disclosure, thereby further reducing a size of a power conversion circuit.

## Claims

1. A power conversion circuit (100), **characterized in that**, coupled between a motor (M) and a wireless charging transmitter device (900), wherein the power conversion circuit (100) comprising:
an inverter (110), comprising a first half-bridge circuit, a second half-bridge circuit and a third half-bridge circuit, wherein the first half-bridge circuit, the second half-bridge circuit and the third half-bridge circuit are coupled to a battery (B), the motor (M) and the wireless charging transmitter device (900) respectively, wherein each of the first half-bridge circuit, the second half-bridge circuit and the third half-bridge circuit comprises two switches; and
a processor (120), coupled to the switches of each of the first half-bridge circuit, the second half-bridge circuit and the third half-bridge circuit, wherein the processor (120) is configured to generate a plurality of control signals at a first stage to respectively control the switches according to a first level of each of the control signals so that the battery (B) supplies power to the motor (M), wherein the processor (120) is configured to adjust the first level of each of the control signals to a second level at a second stage to turn off one of the first half-bridge circuit, the second half-bridge circuit and the third half-bridge circuit, wherein the processor (120) is configured to alternately conduct the switches of the other two of the first half-bridge circuit, the second half-bridge circuit and the third half-bridge circuit so as to adjust a power supply of the wireless charging transmitter device (900) to charge the battery (B) to a target power.

2. The power conversion circuit (100) of claim 1, **characterized in that**, further comprising:
a first guarded switch (SW1), coupled between the inverter (110) and the wireless charging transmitter device (900), and coupled to one of the first half-bridge circuit, the second half-bridge circuit and the third half-bridge circuit; and
a second guarded switch (SW2), coupled between the inverter (110) and the motor (M), and coupled to one of the first half-bridge circuit, the second half-bridge circuit and the third half-bridge circuit, wherein the first guarded switch (SW1) is conducted according to a first operating signal at the second stage, wherein the second guarded switch (SW2) is turned off according to a second operating signal at the second stage.

3. The power conversion circuit (100) of any one of claims 1-2, **characterized in that**, further comprising:
a converter (130, 130A, 130B), coupled between the inverter (110) and the battery (B), configured to convert the power supply rectified by the inverter(110) , and configured to detect a voltage and a current of the battery (B) to determine a plurality of charging modes.

4. The power conversion circuit (100) of any one of claims 3, **characterized in that**, wherein the converter (130A) comprising:
a converter inductor (L4);
a capacitor (C1), coupled to the converter inductor (L4) and the battery (B);
a first converter switch (Q7), coupled to the converter inductor (L4) and the inverter (110), and configured to be conducted according to a first control signal (S7) at the first stage; and
a second converter switch (Q8), coupled to the converter inductor (L4), the capacitor (C1), the inverter (110) and the battery (B), and configured to be turned off according to a second control signal (S8) at the first stage.

5. The power conversion circuit (100) of any one of claims 1-4, **characterized in that**, wherein the processor (120) is configured to conduct the first converter switch (Q7) and the inverter (110) at the first stage respectively so that the battery (B) supplies power to the motor (M).

6. The power conversion circuit (100) of any one of claims 3, **characterized in that**, wherein the converter (130B) comprises:
a converter inductor (L5);
a capacitor (C4), coupled to the converter inductor (L5);
a diode (D1), coupled to the converter inductor (L5), the capacitor(C4), the inverter (110) and the battery (B); and
a change-over switch (SW5), coupled to the converter inductor (L5), and configured to be conducted according to a control signal at the first stage.

7. The power conversion circuit (100) of claim 6, **characterized in that**, wherein the processor (120) is configured to control the first half-bridge circuit, the second half-bridge circuit and the third half-bridge circuit of the inverter (110) at the first stage so that the battery (B) supplies power to the motor (M) through the diode (D1) of the converter (130B).

8. The power conversion circuit (100) of claim 6, **characterized in that**, wherein the processor (120) is configured to respectively conduct the other two of the first half-bridge circuit, the second half-bridge circuit and the third half-bridge circuit at the second stage to rectify a power of the power supply and to conduct the change-over switch (SW5) of the converter (130B) and the one of the first half-bridge circuit, the second half-bridge circuit and the third half-bridge circuit so as to convert a rectified power, thereby allowing the power supply to charge the battery (B) to the target power.

9. An inverter (110), **characterized in that**, disposed in a power conversion circuit (100), wherein the power conversion circuit (100) is coupled between a motor (M) and a wireless charging transmitter device (900), wherein the inverter (110) comprises:
a first half-bridge circuit, coupled to a battery (B), the motor (M) and the wireless charging transmitter device (900);
a second half-bridge circuit, coupled to the battery (B), the motor (M) and the wireless charging transmitter device (900);
a third half-bridge circuit, coupled to the battery (B), the motor (M) and the wireless charging transmitter device (900), wherein each of the first half-bridge circuit, the second half-bridge circuit and the third half-bridge circuit comprises two switches; and
wherein each of the switches of the first half-bridge circuit, the second half-bridge circuit and the third half-bridge circuit respectively receive a plurality of control signals of a processor (120), and the switches are controlled according to a first level of each of the control signals at a first stage so that the battery supplies power to the motor, wherein the processor (120) is configured to adjust the first level of each of the control signals to a second level at a second stage to turn off one of the first half-bridge circuit, the second half-bridge circuit and the third half-bridge circuit, wherein the processor (120) is configured to alternately conduct the switches of the other two of the first half-bridge circuit, the second half-bridge circuit and the third half-bridge circuit so as to adjust a power supply of the wireless charging transmitter device (900) to charge the battery (B) to a target power.

10. The inverter (110) of claim 9, **characterized in that**, wherein the power conversion circuit further comprises:
a first guarded switch (SW1), coupled between the inverter (110) and the wireless charging transmitter device (900), and coupled to one of the first half-bridge circuit, the second half-bridge circuit and the third half-bridge circuit; and
a second guarded switch (SW2), coupled between the inverter (110) and the motor (M), and coupled to one of the first half-bridge circuit, the second half-bridge circuit and the third half-bridge circuit, wherein the first guarded switch (SW1) is conducted according to a first operating signal at the second stage, wherein the second guarded switch (SW2) is turned off according to a second operating signal at the second stage.

11. The inverter (110) of any one of claims 9-10, **characterized in that**, wherein the power conversion circuit (100) further comprises:
a converter (130, 130A, 130B), coupled between the inverter (110) and the battery (B), configured to convert the power supply rectified by the inverter (110), and configured to detect a voltage and a current of the battery(B) to determine a plurality of charging modes.

12. The inverter (110) of any one of claims 9-11, **characterized in that**, wherein the converter (130A) comprises:
a converter inductor (L4);
a capacitor (C1), coupled to the converter inductor (L4) and the battery (B);
a first converter switch (Q7), coupled to the converter inductor (L4) and the inverter (110), and configured to be conducted according to a first control signal (S7) at the first stage; and
a second converter switch (Q8), coupled to the converter inductor (L4), the capacitor (C1), the inverter (110) and the battery (B), and configured to be turned off according to a second control signal (S8) at the first stage.

13. The inverter (110) of any one of claims 9-12, **characterized in that**, wherein the processor (120) is configured to conduct the first converter switch (Q7) and the inverter (110) at the first stage respectively so that the battery (B) supplies power to the motor (M).

14. The inverter (110) of any one of claims 9-11, **characterized in that**, wherein the converter (130B) comprises:
a converter inductor (L5);
a capacitor (C4), coupled to the converter inductor (L5);
a diode (D1), coupled to the converter inductor (L5), the capacitor (C4), the inverter (110) and the battery (B); and
a change-over switch (SW5), coupled to the converter inductor (L5), and configured to be conducted according to a control signal at the first stage;
wherein the processor (120) is configured to control the first half-bridge circuit, the second half-bridge circuit and the third half-bridge circuit of the inverter (110) at the first stage so that the battery (B) supplies power to the motor (M) through the diode (D1) of the converter (130B).

15. The inverter (110) of claim 14, **characterized in that**, wherein the processor (120) is configured to respectively conduct the other two of the first half-bridge circuit, the second half-bridge circuit and the third half-bridge circuit at the second stage to rectify a power of the power supply and to conduct the change-over switch (SW5) of the converter (130B) and the one of the first half-bridge circuit, the second half-bridge circuit and the third half-bridge circuit so as to convert a rectified power, thereby allowing the power supply to charge the battery (B) to the target power.
